# EUROPEAN PATENT APPLICATION

(11) **EP 0 557 669 A2**
(43) Date of publication of application: **01.09.1993**
(21) Application number: 92500147.1
(22) Date of filing: 11.11.1992
(51) Int. Cl.: G06K 17/00, G06K 7/01, G06K 7/00

(54) **Motorized optical reader-recorder**

(30) Priority: 24.02.1992 ES 9200398
(71) Applicant: AMPER S.A., E-28027 Madrid (ES)
(72) Inventor: Callego Rodriguez, Miguel, E-28027 Madrid (ES); De Diego Luis, José Ramon, E-28027 Madrid (ES); Artes Palacios, Francisco, E-28027 Madrid (ES); Pena Manrique, Juan Carlos, E-28027 Madrid (ES)
(74) Representative: Carpintero Lopez, Francisco

(57) **Abstract**

The motorized optical reader-recorder subject of the invention is an optical reader/write system for documents typically used in banking environments, designed to recognize and then transmit the characters forming a code line arranged to such end on such documents, the writing of a code line also being possible.

The same comprises the functional association of a power source (1) and a reader-recorder (2) incorporating the control, electronic, mechanical, electromechanical and optical elements required for codes to be read/written, noteworthy being its small size, real time reading at a transport speed of 1,214 mm/s, the possibility of adjusting the height of the code line and the minimum reading contrast and compatibility with other elements such as document feeder and sorters, thereby allowing a complete document processing system to be formed.

## Description

### OBJECT OF THE INVENTION

The present invention relates, as indicated in the title of this specification, to a motorized optical reader-recorder of standardized characters, designed for real time reading of a code line of the kind usually available in banking environments. The reader result is sent in serial format to a computer commanding the system for storage or subsequent processing.

The equipment can also write such documents and if provided with suitable elements automatically feed and sort the same.

### BACKGROUND OF THE INVENTION

The writing of banking documents for their subsequent automatic processing has long since been subject to a number of standards and recommendations of international standardizing organizations.

Most banking documents are written using one of the four main standards, CMC-7, E13B, OCR-A and OCR-B.

The first two codes, CMC-7 and E13B require magnetic ink write, while the latter two are oriented to their optical type recognition.

The market has a large variety of machines processing these documents. Part of them, among which is the subject of this description, are used for the automatic processing of large quantities of documents, such comprising the insertion of a wide batch of documents, reading and storing the resulting information, writing the same, and sorting the same according to a number of conditions.

An important parameter in such machines is the amount of documents processed by unit of time, which depends upon two factors, viz. speed of transport of the documents and the delay in the time taken by the recognition electronics to recognize the characters.

Ideally, machines should provide both a sufficiently high speed of transport and real time recognition of characters, i.e. with no delays once the character has finished passing in front of the sensor element until recognition thereof.

Some of the machines in the market, which perform a magnetic type character reading fulfil this condition and yet the large amount of data to be processed in optical type recognition has banned this characteristic in equipment of the size and price herein described.

### DESCRIPTION OF THE INVENTION

The motorized optical reader-recorder subject of the invention is a real time optical reading and recording set for standardized OCR-A, OCR-B and/or E13B characters.

Reading is always optical with a camera, both for optical characters and for E13B, written with magnetic ink, and can be made at different heights, wherefore a vertical camera position adjuster is provided together with a number of means to check that the same is correctly positioned. These means comprise a graded scale placed next to the camera and a bar of LEDs that light up if in the area, within the field of vision, through which the characters have passed.

The camera carries out an optical reading with a line CCD, associated optical elements (lenses, mirrors and associated systems) and a light element comprising four bulbs laid out such as to ensure uniformness of the light throughout the field where reading is possible. The actual camera has the necessary elements to condition the signal obtained.

The equipment works ON-LINE, peripherally connected to any computer with a standard series RS-232 interface.

The equipment can work on its own, or connected to other modules (automatic document feeder or sorter).

Installation and maintenance are simple and the conception of the apparatus allows its performance to be very flexible, adapting to different applications by changing the central computer program.

Recording is by impact, and the write tape is housed in a cartridge, which is easy to replace.

The equipment can endorse documents on the reverse, to which end it has a mechanism printing a seal and four programmable digits.

The front of the equipment has a number of LEDs indicating the different operating statuses (fused bulbs, no write tape, height of characters within the field of vision, ...).

The equipment allows up two 32 characters of two different codes to be read and thus, depending upon the reader mode, it can just read either of both codes, any two in different documents or both in the same document, if a buffer character exists between the same.

A contrast selection switch is provided so that in one position it reads characters with a contrast in excess of 45% and in the other the threshold goes down to 35%.

The following general characteristics could be mentioned: the field of vision (area in which all document characters must be located) is of some 8 mm, that must be situated between 3 and 24 mm away from the lower edge, the clearing speed of the documents is 1,214 mm/s, the number of documents processed per unit of time is up to 3,600 documents an hour and the reading capacity is 65 characters per document.

### DESCRIPTION OF THE DRAWINGS

In order to provide a fuller description and contribute to the complete understanding of the characteristics of this invention, a set of drawings is attached to the specification which, while purely illustrative and not fully comprehensive, shows the following:

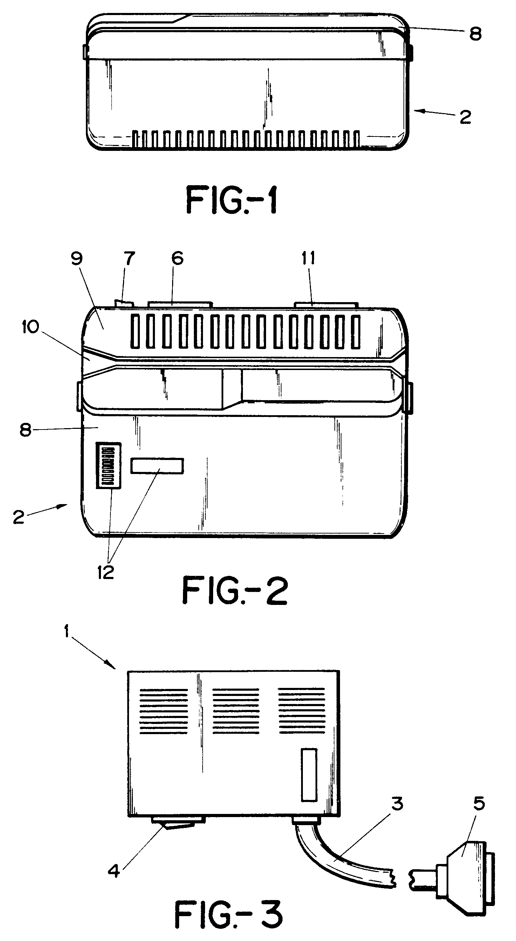

Figure 1.- Is an elevation of the motorized optical reader-recorder subject of the invention.
Figure 2.- Is a plan view of the same equipment.
Figure 3.- Is a plan view of the power source.

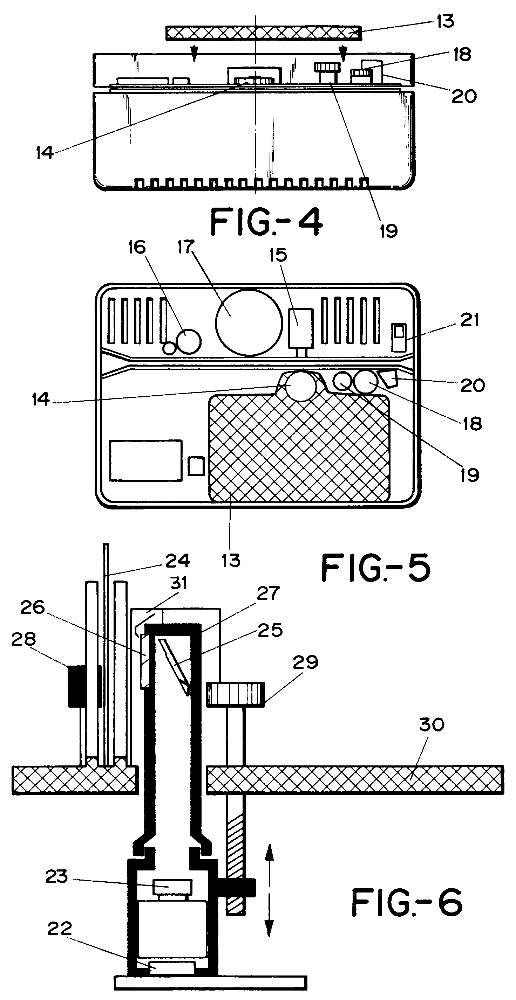

Figure 4.- Is an elevation of the open equipment.
Figure 5.- Is a plan view of the open equipment.
Figure 6.- Is an optical and light diagram.
Figure 7.- Is a general block diagram of the system.
Figure 8.- Is a block diagram of the recognition section.

### PREFERRED EMBODIMENT OF THE INVENTION

The motorized optical reader-recorder for standardized characters subject of the present description is comprised by the association of two differentiated units, a power source (1) supplying the operating voltages required for the reader-recorder (2) and the actual reader-recorder, fitted with the control, electronic, mechanical, electromechanical and optical elements required for reading purposes. Both units are linked by means of a lead (3).

The power source assembly (1) is mounted in a plate box. It is externally provided with a system input (4) with an earth wire, the same module having the fuses and the on-off switch.

The output voltages are transmitted through the output lead (3) which is some three metres long, and ends in a 25 way sub-D female connector (3) to which the actual reader-recorder unit (2) is connected, at the socket plug (6). A power switch (7) to switch the equipment on or off is provided.

The said unit is designed as a table-top set. The design has been studied to minimize the size of the assembly and to render the same compatible with the auxiliary elements (feeder-sorter).

The motorized optical reader-recorder is externally made of self-extinguishing plastic. The front (8) and back (9) covers allow access on removal to the internal elements thereof.

The document is placed at the entrance to the documents track (10) for reading purposes. The mechanisms will in response to the order given by the central computer through the serial channel (11) move the document along the track in order to read, write, endorse, sort, eject the same and so forth.

The front of the equipment is fitted with a number of indicator LEDs (12) that indicate the on/off, tape present/absent, and fused bulbs states. The bar of 8 vertical LEDs indicates the position of the characters passed after a reader order within the field of the 8 mm of the field of vision.

When the external covers of the equipment are removed, other elements come into sight. The tape cartridge (13) contains sufficient write tape to write some 50,000 characters. It is placed on the upper portion of the equipment. The tape is placed around the character wheel (14), and printing is by impact. On the other side of the track is the recording hammer (15) permanently moved by an electric magnet. An endorsing mechanism (16) is provided to print an endorsement on the reverse of the documents, and a paper drive motor (17) can also be seen, such being a step motor that drives the paper back and forth, as appropriate, along the track by means of the relevant transmissions.

The video pickup system is sited close to the track outlet. The drawing shows the upper portion of the camera (18), the reader height adjustment wheel (19), which moves the camera up and down when turned, the bulb stand (20) and the contrast switch (21) that allows characters with different contrasts to be read (one position to read characters with over 45% and another with over 35%).

The camera diagram shows the CCD frame pickup (22), the lenses (23) focussing the frame located in the paper plane (24) on the CCD light-sensitive elements. The mirror (25) allows the rest of the vertical optics to be placed. The glass window (26) prevents the passage of dust to the rest of the optical system, while the cap (27) on rotation allows the window to be cleaned.

The roller (28) brings the document close to the opposite track, diminishing the required field depth. The wheel (29) allows the height of the whole camera to be changed, through an endless screw. The assembly is mounted on the chassis of the equipment (30). The light bulbs (31) are 4 and are vertically positioned next to the camera.

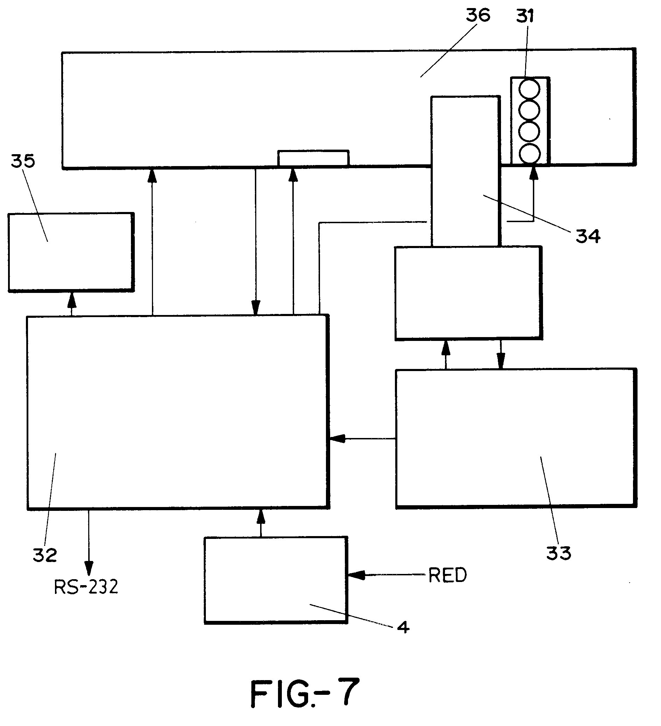

Figure 7 shows the blocks forming part of the system. The power source (4) provides the necessary operating voltages to the motherboard (32) from which they are distributed to the other elements. The motherboard (32) is fitted with the central system control (microprocessor), motor control elements and communications elements.

Character recognition takes place at the parallel recognition board (33) by means of a hardware system outlined hereinafter.

The camera (34) contains the CCD (Frame Sensor) board and associated electronic elements, and the required optical elements. Next to it is the light element (31). The indicator board (35) contains the LEDs that are externally visible.

The mechanical elements (36) are those described above; the camera, lighting, and transport and recording mechanisms.

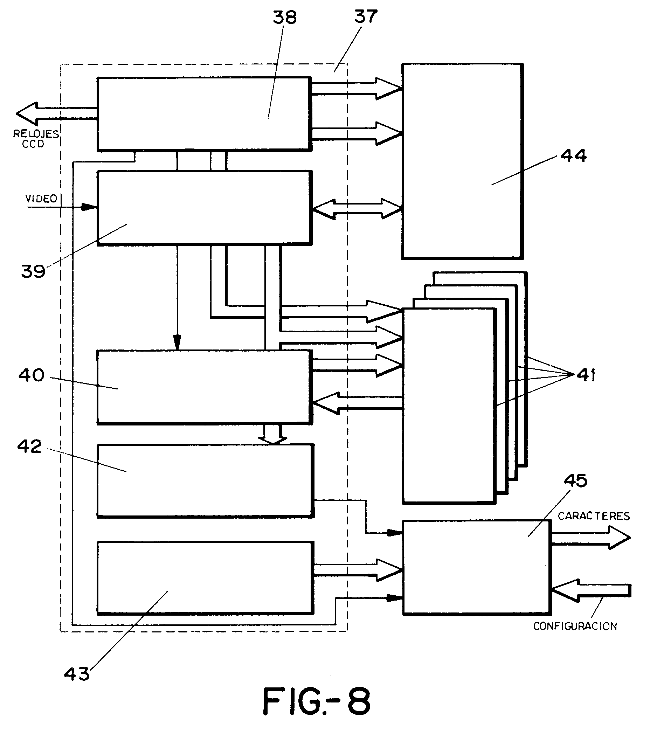

Figure 8 shows a block diagram of the parallel recognition circuit (33).

The main element is a specific application or ASIC integrated circuit (37), developed in particular for this task. This circuit performs the following functions: CCD clock generation (38), series-to-parallel video data conversion (39), recognition states machine performance (40), using the data contained in the recognition EPROMs (41) to advance states each of which correspond to a characteristic element of each of the characters to be recognized, character presence signal generation (42), and interface (43) with the local microprocessor.

The use of this specific purpose integrator together with a parallel recognition method is the key for the manufacture of this kind of equipment, which is smaller in size and price than equipment of comparable characteristics.

Other elements present in the board are the above-mentioned recognition EPROMs (41) containing the character patterns, comprising the sequences of definer characteristics required from each of the characters.

The video RAM (44) contains at each time the video data on the whole relating to a window in which the character may appear.

The interface (43) deals with sending the data (now recognized characters) to the local microprocessor (45) which interprets and groups the same until the motherboard is sent all the characters that have passed before the camera.

The recognition system used can be described as a parallel syntactic recognizer, comparing primitives contained in the recognition memories (41) with the characters to recognize and decides, from the sequence of recognized primitives, that a character displayed matches one of the patterns, when the sequence arrives at the end of what is required for such pattern.

The primitives comprise horizontal sections of the pattern characters, which defines a set of white, black or indifferent pixels that the character must fulfil in order to move to the next primitive for comparison.

We feel that the device has now been sufficiently described for any expert in the art to have grasped the full scope of the invention and the advantages it offers.

The materials, shape, size and layout of the elements may be altered provided that this entails no modification of the essential features of the invention.

The terms used to describe the invention herein should be taken to have a broad rather than a restrictive meaning.

## Claims

1. A motorized optical reader-recorder, designed for real time reading of a code line of the kind certain types of documents carry, essentially characterized in comprising the functional association of a power source (1) supplying the required system voltages and a reader-recorder (2) that incorporates the control, electronic, mechanical, electromechanical and optical elements required for codes to be read/written, both linked by a lead (3) through which the power source (1) supplies the required voltages for system operation.

2. A motorized optical reader-recorder, as in claim one, characterized in that the reader-recorder (2) comprises a motherboard (32) in which the system control (microprocessor), motor control elements and communication elements are provided, associated to which is a character recognition board (33), a CCD board (34) containing the frame sensor and associated elements, an indicator board (35) incorporating LEDs that are externally visible, and a number of elements and mechanisms, such as a camera, lighting and transport and recording mechanisms (36).

3. A motorized optical reader-recorder, as in claim one, characterized in that the recognition circuit (33) comprises a specific application integrated circuit (37) to which a number of EPROM recognition mechanisms (41), a video RAM (44) and communication elements (45) with the motherboard (32) are associated.

4. A motorized optical reader-recorder.
